# FASCICULE DE BREVET EUROPEEN

(11) **EP 0 392 921 B1**
(45) Date de publication et mention de la délivrance du brevet: **31.08.1994**
(21) Numéro de dépôt: 90400983.4
(22) Date de dépôt: 10.04.1990
(51) Int. Cl.: G21C 3/32

(54) **Plaque de filtration associée à un embout inférieur d'un assemblage combustible d'un réacteur nucléaire**
Filterplatte im Fussstück eines Kernreaktorbrennstabbündels
Filter plate associated to a bottom nozzle of a nuclear reactor fuel assembly

(30) Priorité: 12.04.1989 FR 8904838
(43) Date de publication de la demande: 17.10.1990
(73) Titulaire: FRAMATOME, 92400 Courbevoie (FR); COGEMA, F-78141 Velizy Villacoublay (FR)
(72) Inventeur: Grattier, Bernard, F-69570 Dardilly (FR); Rondepierre, Jean-François, F-69009 Lyon (FR)
(74) Mandataire: Bouget, Lucien

(56) Documents cités:
- EP-A- 0 289 829
- EP-A- 0 311 037
- US-A- 4 684 496

## Description

L'invention concerne une plaque de filtration d'un embout inférieur d'un assemblage combustible pour un réacteur nucléaire.

Les réacteurs nucléaires refroidis à l'eau et en particulier les réacteurs refroidis par de l'eau sous pression comportent un coeur constitué par des assemblages prismatiques juxtaposés et placés verticalement qui reposent sur la plaque inférieure de coeur du réacteur nucléaire par un embout inférieur. L'eau de refroidissement du réacteur traverse l'embout inférieur et circule de bas en haut dans la direction verticale à l'intérieur de l'assemblage.

Cette eau de refroidissement est susceptible de contenir des particules qu'elle entraîne à l'intérieur de l'assemblage, à travers des ouvertures traversant la plaque adaptatrice de l'embout inférieur. Les particules viennent se loger dans des interstices compris entre les crayons combustibles et les parois des cellules de la première grille-entretoise de l'assemblage, c'est-à-dire la grille-entretoise située le plus près de l'embout inférieur de l'assemblage.

Le fluide en circulation soumet les particules à des sollicitations axiales et transversales si bien qu'il peut en résulter une usure du gainage du crayon combustible. Il est donc souhaitable de retenir les particules contenues dans le fluide de refroidissement pour les empêcher de pénétrer dans l'assemblage.

On a proposé, par exemple dans les documents US-A-4.664.880 et US-A-4.678.627, des dispositifs de retenue sous la forme de structures en fils métalliques ou en tôle percée disposés dans l'embout inférieur de l'assemblage.

On a également proposé, dans le US-A-4.684.496, d'utiliser, comme dispositif de retenue, une plaque de filtration réalisée sous la forme d'une grille constituée de plaquettes, associée à l'embout inférieur de l'assemblage.

Ces dispositifs connus introduisent généralement une perte de charge importante sur la circulation du fluide de refroidissement du réacteur dans la mesure où les sections de passage du fluide projetées dans un plan perpendiculaire à la section de l'écoulement peuvent être faibles.

On a également proposé dans le EP-A-0.289.829 et dans le EP-A-0.311.037 de réaliser le dispositif de filtration en utilisant la plaque adaptatrice de l'embout inférieur elle-même, comme élément filtrant, soit en prévoyant un perçage spécial de cette plaque, soit en insérant localement des moyens de filtration dans des ouvertures usinées spécialement dans la plaque adaptatrice. La réalisation d'un usinage spécial de cet élément essentiel de structure de l'embout inférieur présente des inconvénients.

Le but de l'invention est donc de proposer une plaque de filtration disposée dans la partie inférieure d'un assemblage combustible d'un réacteur nucléaire pour la retenue de particules contenues dans le fluide de refroidissement du réacteur, l'assemblage ayant un embout inférieur comportant une plaque adaptatrice de direction transversale par rapport à l'assemblage traversée par des ouvertures et des pieds reposant, dans la position de service de l'assemblage, sur une plaque inférieure de coeur du réacteur, cette plaque de filtration introduisant une perte de charge faible sur la circulation du fluide de refroidissement du réacteur tout en assurant une filtration efficace.

Dans ce but, la plaque de filtration est rapportée sur l'embout inférieur dans une disposition sensiblement parallèle à la plaque adaptatrice et en-dessous de celle-ci et elle comporte au moins une zone active dans laquelle elle est traversée par des ouvertures de taille déterminée, destinée à venir en vis-à-vis d'un trou de passage d'eau à travers la plaque inférieure de coeur du réacteur.

Afin de bien faire comprendre l'invention, on va maintenant décrire, en se référant aux figures jointes en annexe, plusieurs modes de réalisation d'une plaque de filtration suivant l'invention.

La figure 1 est une vue schématique en coupe par un plan vertical de la partie inférieure d'un assemblage combustible comportant une plaque de filtration suivant l'invention.

La figure 2 est une vue en plan d'une partie de la zone active d'une plaque de filtration suivant l'invention et suivant un premier mode de réalisation.

La figure 3 est une vue en plan d'une partie d'une zone active d'une plaque de filtration suivant l'invention et suivant un second mode de réalisation.

La figure 3A est une vue à grande échelle du détail A de la figure 3.

La figure 4 est une vue en plan d'une partie de la zone active d'une plaque de filtration suivant l'invention et suivant un troisième mode de réalisation.

La figure 5 est une vue en coupe verticale d'une plaque de filtration suivant l'invention reposant sur la plaque inférieure de coeur d'un réacteur nucléaire.

La figure 6 est une vue partielle suivant 6 de la figure 5.

La figure 7 est une vue en coupe partielle d'une plaque de filtration suivant l'invention réalisée sous la forme d'une grille.

La figure 8 est une vue de dessus suivant 8 de la figure 7.

La figure 8A est une vue en coupe transversale à grande échelle suivant AA de la figure 8 de deux barreaux de la grille représentée sur la figure 8.

La figure 9 est une vue de dessus identique à la figure 8 montrant une variante de réalisation de la grille de filtration.

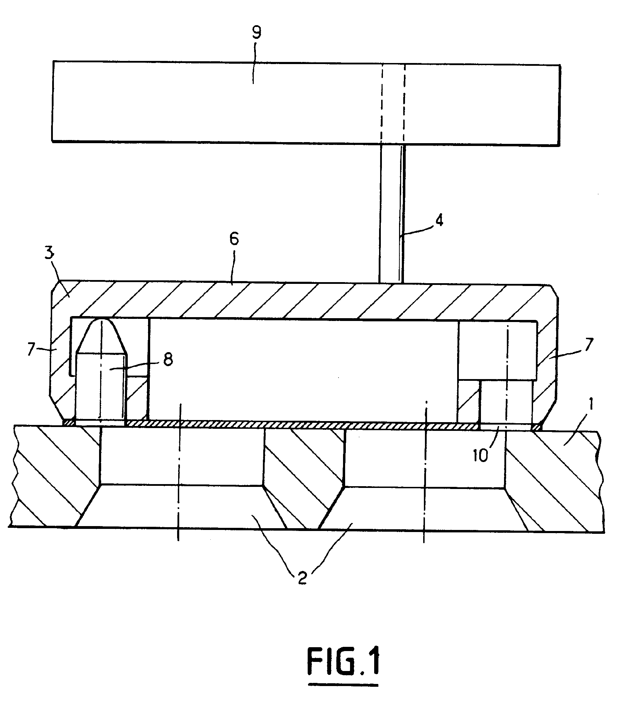

Sur la figure 1, on voit une partie de la plaque inférieure de coeur 1 d'un réacteur nucléaire comportant des trous de passage d'eau 2 au niveau de l'embout inférieur 3 d'un assemblage combustible.

L'embout inférieur 3 constitue une partie de l'ossature de l'assemblage à laquelle sont reliés les tubes-guides 4 à leur partie inférieure. L'ossature comporte également un ensemble de grilles-entretoises reliées aux tubes-guides 4, seule la grille-entretoise inférieure 9 étant représentée sur la figure 1.

L'embout 3 comporte une plaque adaptatrice 6 et des pieds 7 destinés à venir reposer sur la surface supérieure de la plaque inférieure de coeur 1.

L'embout inférieur et les grilles-entretoises présentent une forme sensiblement carrée correspondant à la section transversale de l'assemblage combustible.

Deux des pieds 7 de l'embout inférieur 3 comportent des ouvertures destinées à venir s'engager sur des pions de centrage et de positionnement 8 de l'assemblage combustible fixés sur la face supérieure de la plaque inférieure de coeur 1.

Une plaque de filtration 10 est intercalée entre la surface inférieure des pieds 7 et la surface supérieure de la plaque inférieure de coeur 1, de manière à assurer la retenue de particules contenues dans le fluide de refroidissement du réacteur avant que ces particules puissent pénétrer dans l'assemblage combustible.

Le fluide de refroidissement du réacteur traverse la plaque inférieure de coeur 1 au niveau des trous de passage 2 et pénètre ensuite dans l'assemblage combustible à travers les ouvertures de la plaque adaptatrice 6.

Lorsqu'une plaque de filtration 10 est interposée sur la circulation du fluide de refroidissement à un niveau inférieur à la plaque adaptatrice 6, cette plaque de filtration 10 est susceptible de retenir les particules en circulation, dans la mesure où cette plaque de filtration présente des trous d'une taille déterminée permettant d'arrêter les particules d'une taille supérieure à une certaine limite. Cette limite est généralement déterminée par la dimension des interstices subsistant entre les crayons combustibles de l'assemblage et les cellules de la première grille entretoise 9 et se situe dans un intervalle compris entre deux et quatre millimètres.

Les zones actives de la plaque de filtration 10 dans lesquelles cette plaque de filtration est percée d'ouvertures de taille déterminée correspondent sensiblement aux zones de la plaque venant en vis-à-vis des trous de passage d'eau de la plaque inférieure de coeur, lorsque l'assemblage est en position de service, comme représenté sur la figure 1.

Ces zones actives ont une forme généralement circulaire correspondant à la section des trous de passage d'eau dans la plaque inférieure de coeur.

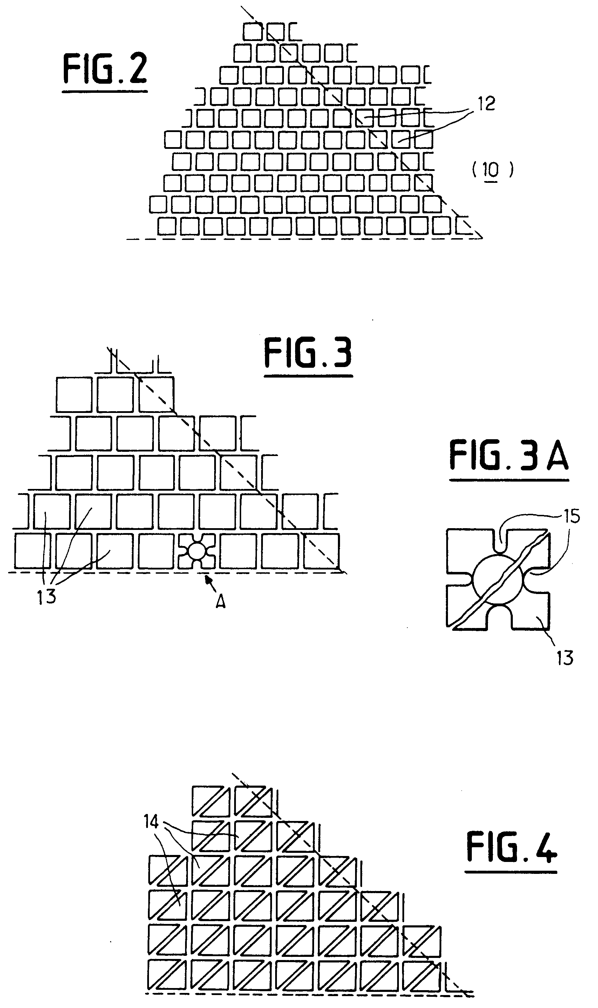

Sur la figure 2, on a représenté une partie d'une zone active d'une plaque de filtration suivant l'invention dont les ouvertures de passage d'eau et de retenue des particules ont une forme carrée.

Les ouvertures 12 découpées dans la plaque de filtration ont un côté dont la dimension correspond à la dimension minimale des particules dont on veut assurer la retenue.

Sur la figure 2, on a représenté approximativement un-huitième d'une partie active d'une plaque de filtration suivant l'invention, le rayon de cette partie active correspondant au rayon d'un trou de passage d'eau 2 dans la plaque inférieure de coeur.

Sur la figure 3, on a représenté une variante de réalisation dans laquelle les découpes de forme carrée 13 traversant la plaque de filtration ont une dimension sensiblement supérieure à la dimension des découpes 12 de la plaque de filtration représentée sur la figure 2.

Ces découpes de forme carrée ont donc une dimension sensiblement supérieure à la dimension minimale des particules dont on veut assurer la retenue.

Comme il est visible sur la figure 3A, on voit que chacune des cellules 13 de forme carrée découpées dans la plaque de filtration comporte quatre bossages 15 dirigés vers l'intérieur de la cellule. Les bossages 15 délimitent à l'intérieur de la cellule 13 des trous de passage d'eau dont la dimension est inférieure à la dimension minimale des particules dont on veut assurer la retenue.

Sur la figure 4, on voit un troisième mode de réalisation de la zone active d'une plaque de filtration suivant l'invention, cette zone active comportant des découpes en forme de triangles rectangles 14 juxtaposés pour constituer un réseau de passage d'eau et de retenue des particules dont la dimension est supérieure à une certaine limite dépendant de la taille des ouvertures triangulaires 14.

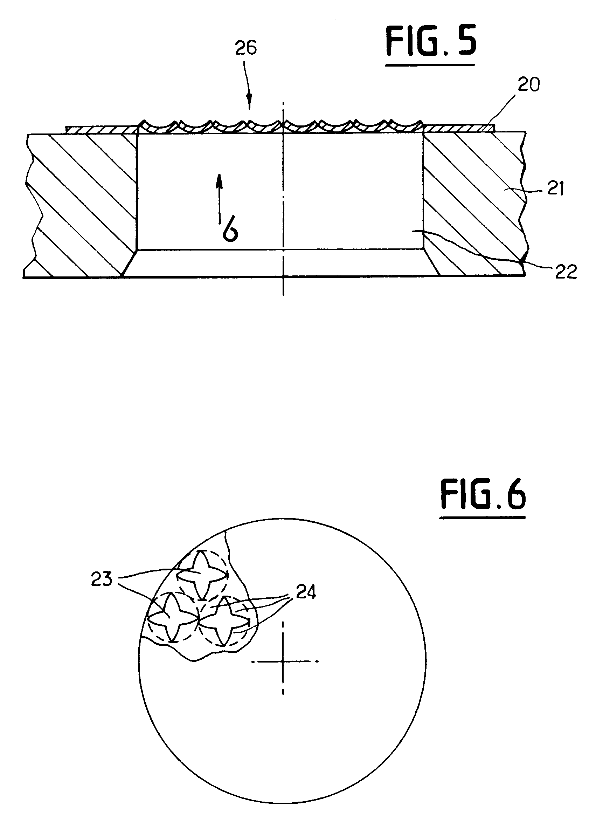

Sur les figures 5 et 6, on a représenté un quatrième mode de réalisation de la plaque de filtration suivant l'invention.

La plaque 20 comporte une zone active en vis-à-vis de chacun des trous de passage d'eau 22 de la plaque inférieure de coeur 21 dans laquelle la plaque de filtration 20 est emboutie pour constituer des ouvertures 23 dont la forme est visible sur la figure 6. Chacune des ouvertures 23 est délimitée par quatre ailettes 24 repoussées en dehors du plan de la plaque 20, au moment de l'emboutissage.

Le trou de passage central 23 délimité par les ailettes 24 permet de réaliser le passage d'eau et la retenue de particules dont la taille est supérieure à une certaine limite.

Dans le cas où la plaque de filtration est réalisée par emboutissage, la zone emboutie doit correspondre parfaitement à la section de passage d'eau 22 dans laquelle elle vient se loger.

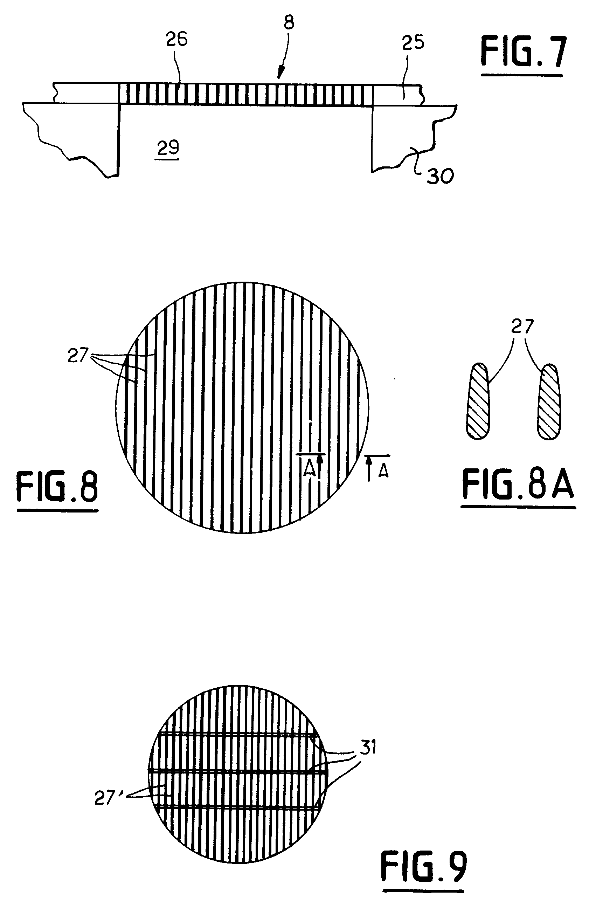

Sur les figures 7 et 8, on voit une plaque de filtration 25 dont la zone active 26 est réalisée sous la forme d'une grille comportant des lamelles parallèles 27 dont l'écartement correspond à la taille minimale des particules dont on veut assurer la retenue au niveau de la plaque de filtration 25.

Les lamelles 27 sont juxtaposées à l'intérieur d'ouvertures circulaires ménagées dans la plaque 25 et dont la dimension correspond à la dimension des trous de passage d'eau 29 de la plaque inférieure de coeur 30. Ces lamelles 27 peuvent être soudées à leurs extrémités sur les bords de l'ouverture de la plaque de filtration.

Pour limiter la perte de charge du fluide de refroidissement lors de la traversée de la plaque de filtration 25, les lamelles 27 ont une forme profilée, comme il est visible sur la figure 8A. Cette forme profilée adaptée à l'écoulement du fluide suivant la direction perpendiculaire à la plaque de filtration permet une réduction notable de la perte de charge.

Les lamelles 27 des parties actives de la plaque de filtration 25 sont fixées uniquement à leurs extrémités et sont toutes placées parallèlement les unes aux autres. Ces lamelles sont susceptibles de vibrer sous l'effet des sollicitations hydrauliques du fluide de refroidissement traversant les zones actives de la plaque de filtration 25.

Pour éviter ces vibrations, il est possible de placer des raidisseurs 31 dans des directions perpendiculaires à celles des lamelles 27′, comme il est visible sur la figure 9. Les raidisseurs 31 peuvent être soudés ou fixés d'une autre manière sur les lamelles 27′ et sur les bords de l'ouverture traversant la plaque de filtration 25.

Dans tous les cas, la plaque de filtration suivant l'invention réalise une retenue efficace des particules contenues dans le fluide de refroidissement du réacteur ayant une taille supérieure à une limite déterminée.

Cette plaque de filtration introduit sur le circuit du fluide de refroidissement une perte de charge modérée, dans la mesure où les ouvertures de la plaque de filtration se trouvent dans le prolongement des ouvertures de traversée de la plaque inférieure de coeur.

Dans le cas où ces ouvertures sont réalisées par emboutissage d'une plaque, les éléments déflecteurs 24 de la plaque sont dirigés dans le sens de l'écoulement, ce qui permet de réduire la perte de charge.

L'invention ne se limite pas aux modes de réalisation qui ont été décrits.

C'est ainsi qu'on peut imaginer des perforations ou des ouvertures découpées ou usinées d'une autre manière dans la plaque de filtration d'une forme différente de celles qui ont été décrites.

La plaque de filtration peut être réalisée en tout matériau résistant au fluide de refroidissement dans les conditions de service du réacteur et par exemple en alliage à base de nickel ou en acier martensitique.

La plaque de filtration suivant l'invention peut être non seulement disposée en contact avec la surface supérieure de la plaque inférieure de coeur comme il a été décrit mais encore disposée dans l'embout inférieur de l'assemblage, dans une position intermédiaire entre son extrémité inférieure et sa plaque adaptatrice ou encore fixée en contact avec la face inférieure de la plaque adaptatrice.

Dans tous les cas, les ouvertures de la plaque de filtration devront se trouver en vis-à-vis des ouvertures de passage du fluide de refroidissement traversant la plaque inférieure de coeur, pour limiter les pertes de charge.

L'invention s'applique à tout assemblage combustible d'un réacteur nucléaire refroidi à l'eau.

## Revendications

1. Plaque de filtration disposée dans la partie inférieure d'un assemblage combustible d'un réacteur nucléaire pour la retenue de particules contenues dans le fluide de refroidissement du réacteur, l'assemblage ayant un embout inférieur (3) comportant une plaque adaptatrice (6) de direction transversale par rapport à l'assemblage traversée par des ouvertures et des pieds (7) reposant, dans la position de service de l'assemblage, sur une plaque inférieure de coeur (1) du réacteur, caractérisée par le fait qu'elle est rapportée sur l'embout inférieur (3) dans une disposition sensiblement parallèle à la plaque adaptatrice (6) et en-dessous de celle-ci et qu'elle comporte au moins une zone active dans laquelle elle est traversée par des ouvertures (12; 13; 14; 26) de taille déterminée, destinée à venir en vis-à-vis d'un trou de passage d'eau (2; 22; 29) à travers la plaque inférieure de coeur (1; 21; 30) du réacteur.

2. Plaque de filtration selon la revendication 1, caractérisée par le fait qu'elle est fixée sous les pieds (7) de l'embout inférieur (3).

3. Plaque de filtration suivant l'une quelconque des revendications 1 et 2, caractérisée par le fait que les ouvertures de passage d'eau de la zone active sont constituées par des découpes (12) de forme carrée dont le côté a une dimension correspondant à la taille minimale des particules à retenir.

4. Plaque de filtration suivant l'une quelconque des revendications 1 et 2, caractérisée par le fait que les ouvertures de passage d'eau de la zone active sont constituées par des découpes (13) de forme carrée dont le côté a une dimension supérieure à la taille des particules à retenir, à l'intérieur desquelles des bossages (15) s'étendent en direction du centre du carré et ménagent entre eux des espaces de retenue dont la dimension correspond à la taille des particules à retenir.

5. Plaque de filtration suivant l'une quelconque des revendications 1 et 2, caractérisée par le fait que les ouvertures de passage d'eau de la zone active sont constituées par des découpes (14) de forme triangulaire dont la dimension maximale des côtés correspond à la taille des particules à retenir.

6. Plaque de filtration suivant l'une quelconque des revendications 1 et 2, caractérisée par le fait que les ouvertures de passage d'eau de la zone active sont constituées par des parties embouties de la plaque (20), des passages d'eau (23) étant délimités par des parties de la plaque (20) relevées pour constituer des déflecteurs, dans le sens de circulation de l'eau de refroidissement.

7. Plaque de filtration suivant l'une quelconque des revendications 1 et 2, caractérisée par le fait que les ouvertures de passage d'eau sont délimitées par des lamelles (27) parallèles entre elles disposées suivant une ouverture de la plaque de filtration (25) correspondant à un trou de passage d'eau (29) de la plaque inférieure de coeur (30).

8. Plaque de filtration suivant la revendication 7, caractérisée par le fait que la section transversale des lamelles (27) est profilée dans le sens de circulation de l'eau de refroidissement du réacteur.

9. Plaque de filtration suivant l'une quelconque des revendications 7 et 8, caractérisée par le fait que des raidisseurs (31) sont fixés sur les lamelles (27), dans une direction perpendiculaire à celles-ci.

10. Plaque de filtration suivant l'une quelconque des revendications 1 à 9, caractérisée par le fait qu'elle est constituée en un alliage de nickel à durcissement structural.

11. Plaque de filtration suivant l'une quelconque des revendications 1 à 9, caractérisée pa rle fait qu'elle est réalisée en un acier martensitique.

## Patentansprüche

1. Filterplatte im Fußstück eines Brennstabbündels eines Kernreaktors für die Rückhaltung von Partikeln, die in der Kühlflüssigkeit des Reaktors enthalten sind, wobei der Zusammenbau ein unteres Fußstück (3) aufweist, welches in Querrichtung gegenüber dem Zusammenbau eine Zwischenplatte (6) enthält, welche von Öffnungen und Fußteilen (7) durchquert wird, die in Arbeitsstellung des Zusammenbaus auf einem unteren Kernblech (1) des Reaktors aufliegen,
**dadurch gekennzeichnet, daß**
sie an dem unteren Fußstück (3) weitgehend parallel zu der Zwischenplatte (6) unterhalb derselben angeordnet ist und dadurch, daß sie wenigstens einen aktiven Bereich aufweist, in dem sie von Öffnungen (12; 13; 14; 26) einer vorbestimmten Abmessung durchquert wird, die gegenüber einer Durchlaßbohrung für Wasser (2; 22; 29) in dem unteren Kernblech (1; 21, 30) des Reaktors angeordnet sind.

2. Filterplatte nach Anspruch 1,
**dadurch gekennzeichnet, daß**
sie unter den Fußteilen (7) des unteren Fußstückes (3) befestigt ist.

3. Filterplatte nach einem der Ansprüche 1 und 2,
**dadurch gekennzeichnet, daß**
die Durchlaßöffnungen für Wasser in dem aktiven Bereich aus rechteckigen Ausschnitten (13) bestehen, deren Seiten eine Abmessung haben, die der Mindestgröße der festzuhaltenden Partikel entspricht.

4. Filterplatte nach einem der Ansprüche 1 und 2,
**dadurch gekennzeichnet, daß**
die Durchlaßöffnungen für Wasser in dem aktiven Bereich aus rechteckigen Ausschnitten (13) bestehen, deren Seiten eine Abmessung haben, die größer ist, als die Größe der zurückzuhaltenden Partikel, und an deren Innenseite sich Gußvorsprünge (15) in Richtung des Mittelpunktes des Rechteckes erstrecken und die untereinander einen verfügbaren Rückhalteraum bilden, dessen Abmessungen der Größe der festzuhaltenden Partikel entsprechen.

5. Filterplatte nach einem der Ansprüche 1 und 2,
**dadurch gekennzeichnet, daß**
die Durchlaßöffnungen für Wasser in dem aktiven Bereich aus dreieckigen Ausschnitten (14) bestehen, deren maximale Seitenabmessungen der Größe der festzuhaltenden Partikel entsprechen.

6. Filterplatte nach einem der Ansprüche 1 oder 2,
**dadurch gekennzeichnet, daß**
die Durchlaßöffnungen für Wasser in dem aktiven Bereich aus gestanzten Teilen der Platte (20) bestehen, wobei die Durchlaßöffnungen für Wasser durch Teile der Platte (20) gebildet werden, die hochgezogen sind, um Ablenkbleche im Kreislauf des Küfllwassers zu bilden.

7. Filterplatte nach einem der Ansprüche 1 und 2,
**dadurch gekennzeichnet, daß**
die Durchlaßöffnungen für Wasser durch untereinander parallel verlaufende Lamellen (27) begrenzt werden, die entlang einer Öffnung in der Filterplatte (25) angeordnet werden, welche einer Durchlaßöffnung (29) für Wasser der unteren Kernplatte (30) entspricht.

8. Filterplatte nach Anspruch 7,
**dadurch gekennzeichnet, daß**
das Querprofil der Lamellen (27) in der Strömungsrichtung des Kühlwassers des Reaktors profiliert ist.

9. Filterplatte nach einem der Ansprüche 7 und 8,
**dadurch gekennzeichnet, daß**
Versteifungen (31) an den Lamellen (27) angeordnet sind, die rechtwinklig zu diesen verlaufen.

10. Filterplatte nach einem der Ansprüche 1 bis 9,
**dadurch gekennzeichnet, daß**
sie aus einer strukturell gehärteten Nickelegierung besteht.

11. Filterplatte nach einem der Ansprüche 1 bis 9,
**dadurch gekennzeichnet, daß**
sie aus einem Martensitstahl besteht.

## Claims

1. Filtration plate located in the lower part of a fuel assembly of a nuclear reactor for the retention of the particles contained in the reactor cooling fluid, the assembly having a lower connector (3) with an adaptor plate (6) in a transverse direction with respect to the assembly traversed by the orifices and feet (7) resting, in the assembly service position, on a lower reactor coreplate (1), characterized in that it is connected to the lower connector (3) in an arrangement substantially parallel to the adaptor plate (6) and below the latter and has at least one active zone in which it is traversed by orifices (12, 13, 14, 26) having a given size and which are intended to face a water passage hole (2, 22, 29) through the lower coreplate (1, 21, 30) of the reactor.

2. Filtration plate according to claim 1, characterized in that it is fixed beneath the feet (7) of the lower connector (3).

3. Filtration plate according to either of the claims 1 and 2, characterized in that the water-passage orifices of the active zone are constituted by square cutouts (12), the side of which is of a dimension corresponding to the minimum size of the particles to be retained.

4. Filtration plate according to either of the claims 1 and 2, characterized in that the water-passage orifices of the active zone are constituted by square cutouts (13), the side of which is of a dimension larger than the size of the particles to be retained and within which bosses (15) extend in the direction of the centre of the square and between them provide retention spaces of a direction corresponding to the size of the particles to be retained.

5. Filtration plate according to either of the claims 1 and 2, characterized in that the water-passage orifices of the active zone are constituted by triangular cutouts (14), the maximum dimension of the sides of which corresponds to the size of the particles to be retained.

6. Filtration plate according to either of the claims 1 and 2, characterized in that the water-passage orifices of the active zone consist of stamped parts of the plate (20), water passages (23) being delimited by parts of the plate (20) which are raised to form deflectors in the direction of circulation of the cooling water.

7. Filtration plate according to either of the claims 1 and 2, characterized in that the water-passage orifices are delimited by parallel lamellae (27) and arranged in an orifice of the filtration plate (25) corresponding to a water-passage hole (29) of the lower coreplate (30).

8. Filtration plate according to claim 7, characterized in that the cross-section of the lamellae (27) is profiled in the direction of circulation of the cooling water of the reactor.

9. Filtration plate according to either of the claims 7 and 8, characterized in that stiffeners (31) are fastened to the lamellae (27) in a direction perpendicular thereto.

10. Filtration plate according to any one of the claim 1 to 9, characterized in that it is made from a nickel alloy with structural hardening.

11. Filtration plate according to any one of the claims 1 to 9, characterized in that it is made from martensitic steel.
